# EUROPÄISCHE PATENTSCHRIFT

(11) **EP 2 197 701 B1**
(45) Veröffentlichungstag und Bekanntmachung des Hinweises auf die Patenterteilung: **15.01.2014**
(21) Anmeldenummer: 08837953.2
(22) Anmeldetag: 11.09.2008
(51) Int. Cl.: B60K 28/06

(54) **ALKOHOL-WEGFAHRSPERRE MIT NOTFALL-FAHROPTION**
ALCOHOL IMMOBILIZER WITH EMERGENCY DRIVE OPTION
DISPOSITIF ANTI-DÉMARRAGE EN CAS D'ALCOOLÉMIE AVEC OPTION DÉMARRAGE D'URGENCE

(30) Priorität: 05.10.2007 DE 102007047709
(43) Veröffentlichungstag der Anmeldung: 23.06.2010
(73) Patentinhaber: Robert Bosch GmbH, 70442 Stuttgart (DE)
(72) Erfinder: KASCHNER, Axel, 72070 Tuebingen (DE)
(86) Internationale Anmeldenummer: PCT/EP2008/062052
(87) Internationale Veröffentlichungsnummer: WO 2009/047074

(56) Entgegenhaltungen:
- US-A- 5 020 628
- US-A1- 2004 138 823
- US-A1- 2007 200 663
- US-B1- 6 229 908
- 'Quebec's Approach to Emergency Override Use for Interlock Program Participants', [Online] Gefunden im Internet: <URL:http://trid.trb.org/view.aspx?id=81173 0>

## Beschreibung

Die Erfindung betrifft eine Vorrichtung zur Verhinderung des Starts oder der Inbetriebnahme eines Fahrzeugs durch einen unter Alkoholeinfluss stehenden Fahrzeugführer gemäß dem Oberbegriff des Anspruchs 1.

### Stand der Technik

Allein in Deutschland ereignen sich jedes Jahr mehr als 20 000 Verkehrsunfälle mit Beteiligten unter Alkoholeinfluss. Da diese alkoholbedingten Unfälle jährlich für mehr als 600 Menschen mit dem Tod und für mehr als 8 000 Menschen mit schweren Verletzungen enden, hat man in den vergangenen Jahren nach Möglichkeiten zur Vermeidung dieser Unfälle gesucht.

Eine der dabei vorgeschlagenen Möglichkeiten besteht in der Verwendung einer Vorrichtung der eingangs genannten Art, die häufig auch als Alkohol-Interlock-System bezeichnet wird. Diese Vorrichtung wird in das Fahrzeug eingebaut und hindert alkoholisierte Fahrzeugführer am Start bzw. an der Inbetriebnahme des Fahrzeugs, wenn der Alkoholspiegel des Fahrzeugführers einen vorgegebenen Schwellenwert übersteigt.

Die meisten augenblicklich im Gebrauch befindlichen Alkohol-Interlock-Systeme basieren auf des Messung des Alkoholgehalts in der Ausatemluft des Fahrzeugsführers und umfassen dazu ein Messgerät zur Messung des Atemalkohols des Fahrzeugsführers, eine mit dem Messgerät verbundene oder in das Messgerät integrierte Anzeigeeinrichtung, die anzeigt, ob der gemessene Alkoholgehalt den vorgegebenen Schwellenwert übersteigt, oder nicht, ein mit dem Messgerät verbundenes Steuergerät, sowie eine zumeist in einen Zünd- und Anlasser-Stromkreis des Fahrzeugs integrierte Wegfahrsperre. Wenn der Fahrzeugführer die Zündung des Kraftfahrzeugs einschaltet, wird er durch eine entsprechende Anzeige auf der Anzeigeeinrichtung aufgefordert, zur Bestimmung des Alkoholgehalts in der Atemluft eine Atemprobe abzugeben. Wenn der Alkoholgehalt in der Atemprobe den vorgegebenen Schwellenwert übersteigt, wird die Stromzufuhr zum Anlasser blockiert, um eine Fahrt unter Alkoholeinfluss zu verhindern. Nach dem Verstreichen einer vorgegebenen Wartezeit von etwa 10 Minuten kann gewöhnlich eine weitere Atemprobe abgegeben werden, deren Alkoholgehalt erneut vom Messgerät ermittelt wird und über die Fortdauer der Blockierung des Fahrzeugs durch das Steuergerät und die Wegfahrsperre bzw. über eine Startfreigabe entscheidet.

Neben einer Messung des Atemalkohols gibt es jedoch auch andere Möglichkeiten, mit denen sich zum Beispiel durch IR-basierte Spektroskopie der Alkoholgehalt im Blut, im Gewebe oder in der interstitiellen Gewebeflüssigkeit des Fahrzeugsführers messen oder der Alkoholgehalt im Hautschweiß des Fahrzeugführers mit Hilfe chemischer Sensoren analysieren lässt oder mit denen sich physiologisch vom Blutalkoholgehalt abhängige Parameter, wie Augen- und Kopfbewegungen sowie die Herzfrequenz des Fahrzeugführers auswerten lassen, um eine eventuelle Alkoholisierung des Fahrzeugführers festzustellen.

Einige dieser Möglichkeiten lassen sich aus Druckschriften entnehmen, die in der US 2003/0120139 A1 im Zusammenhang mit einer Vorrichtung zum Verhindern der Inbetriebnahme einer Maschine durch eine unter dem Einfluss von Alkohol oder einer anderen Droge stehenden Bedienungsperson zitiert sind.

Unabhängig von der zur Ermittlung der Alkoholisierung des Fahrzeugführers verwendeten Technik haben jedoch sämtliche der bekannten Systeme den Nachteil, dass sich das Fahrzeug nach einer Aktivierung der Wegfahrsperre über einen gewissen Mindestzeitraum nicht mehr starten lässt, zum einen wegen der vorgegebenen Wartezeit und zum anderen, weil die erneute Ermittlung des Alkoholgehaltes ebenso wie bereits die erste Ermittlung desselben eine gewisse Zeit in Anspruch nimmt, zum Beispiel im Falle einer Verwendung von Messgeräten zur Messung des Atemalkoholgehalts unter Einsatz von Brennstoffzellen bei tiefen Umgebungstemperaturen etwa eine Minute.

Aus der KR 2001011208 A ist es bereits bekannt, eine Warneinrichtung eines Fahrzeugs einzuschalten, wenn das Fahrzeug von einem alkoholisierten Fahrzeugführer gestartet oder gefahren wird. Die dazu verwendete Vorrichtung umfasst einen Sensor zur Ermittlung des Alkoholgehalts im Atem des Fahrzeugführers.

Die US-A 5,020,621 zeigt eine Vorrichtung zur Verhinderung des Starts eines Fahrzeug durch einen unter Alkoleinfluss stehenden Fahrzeugführer mittels einer Wegfahrsperre. Dabei sind Mittel zum Umgehen oder außer Kraft setzen der Wegfahrsperre vorgesehen.

Die US 2004/138823 A1 zeigt ebenfalls eine Vorrichtung zum Verhindern des Starts eines Fahrzeugs durch einen unter Alkoholeinfluss stehenden Fahrzeugführer, mittels einer Wegfahrsperre, die durch entsprechende Mittel umgangen oder außer Kraft gesetzt werden kann.

Die US 2007/200663 A1 zeigt eine Vorgehensweise, welche die Inbetriebnahme des Fahrzeugs durch einen alkoholisierten Fahrer verhindert. Auch hier sind Mittel vorgesehen, die einen Start des Fahrzeugs dennoch ermöglichen. Es ist hier vorgesehen, dass bei Aktivieren dieser Überbrückung der Startverhinderung geblinkt wird, Töne erzeugt werden oder drahtlos mit einer Datenbank oder einem Warnsystem kommuniziert wird. Diese Funktionalität ist nur für autorisierte Personen wie z.B. Polizei, Rettungskräfte, etc. vorgesehen, nicht für den Fahrer oder einen Beifahrer. Die Aktivierung des Überbrückungssystems ist dabei unabhängig von der Aktivierung der Wegfahrsperre.

Die US 5,020,628 offenbart eine Vorrichtung zur Verhinderung des Startens eines Fahrzeuges, wobei die Vorrichtung weiterhin ausgebildet ist, Atemluft auf Alkohol zu analysieren. Die Vorrichtung ist ausgebildet sicherzustellen, dass die analysierte Atemprobe von einem Menschen stammt.

Ausgehend hiervon liegt der Erfindung die Aufgabe zugrunde, eine Vorrichtung der eingangs genannten Art dahingehend zu verbessern, dass sich das Fahrzeug zumindest in Notfällen oder Gefahrensituationen trotz zuvor aktivierter Wegfahrsperre schnell starten lässt.

### Offenbarung der Erfindung

Diese Aufgabe wird erfindungsgemäß durch Mittel zum Umgehen oder Außerkraftsetzen der Wegfahrsperre gelöst, mit denen die Wegfahrsperre deaktiviert werden kann.

Um zu vermeiden, dass diese Mittel von alkoholisierten Fahrzeugführern in missbräuchlicher Weise ausgenutzt werden, um das Fahrzeug unter Umgehung oder Außerkraftsetzung der infolge der Alkoholisierung aktivierten Wegfahrsperre zu starten oder in Betrieb zu nehmen, muss eine solche missbräuchliche Benutzung der Mittel zum Umgehen oder Außerkraftsetzen der Wegfahrsperre nach Möglichkeit ausgeschlossen oder zumindest registriert werden.

Das letztere kann gemäß einer ersten vorteilhaften Ausgestaltung der Erfindung dadurch erfolgen, dass die Vorrichtung einen Speicher zum Speichern von jeder Umgehung oder Außerkraftsetzung der Wegfahrsperre mit Hilfe der Mittel umfasst. Dies ermöglicht es besonders bei Fahrzeugen von alkoholauffälligen Fahrzeugführern, bei denen die Verwendung eines Alkohol-Interlock-Systems gerichtlich oder polizeilich angeordnet wurde, in gewissen Zeitabständen eine Kontrolle des Speichers durchzuführen, um eine auf eine missbräuchliche Benutzung hindeutende mehr als einmalige Umgehung oder Außerkraftsetzung der Wegfahrsperre festzustellen.

Erfindungsgemäß umfasst die Vorrichtung Mittel zum Absenden eines Umgehungs- oder Außerkraftsetzungssignals, die bei jedem Umgehen oder Außerkraftsetzen der Wegfahrsperre ein Signal an eine Meldestelle senden, beispielsweise mittels eines mit der Vorrichtung verbundenen oder in diese integrierten Senders, dessen Signal über ein Mobilfunknetz oder ein anderes Kommunikationsnetz, wie ein Car-to-Car-Kommunikationsnetz, zur Überprüfung des Vorfalls an die nächstgelegene Polizeidienststelle oder das nächstgelegene Polizeifahrzeug übermittelt werden kann.

Erfindungsgemäß wird die maximale Fahrgeschwindigkeit des Fahrzugs nach jedem Umgehen oder Außerkraftsetzen der Wegfahrsperre bis zu einer erneuten Freigabe der Wegfahrsperre auf einen Geschwindigkeitswert begrenzt, zum Beispiel auf 50 km/h, bei dem es im Falle eines alkoholbedingten Unfalls des Fahrzeugs bei den Beteiligten in der Regel noch nicht zu tödlichen oder schwerwiegenden Verletzungen kommt, der jedoch eine ausreichend schnelle Entfernung des Fahrzeugs von seinem Standort oder einen ausreichend schnellen Transport eines Notfallpatienten zu einem Arzt oder Krankenhaus gestattet.

Erfindungsgemäß umfasst das Fahrzeug auch Mittel zur automatischen Aktivierung einer Warneinrichtung, zum Beispiel der Warnblinkanlage des Fahrzeugs, nach jedem Umgehen oder Außerkraftsetzen der Wegfahrsperre, um auf diese Weise andere Verkehrsteilnehmer auf eine Gefahrensituation hinzuweisen bzw. vor einer potentiellen Gefährdung durch einen alkoholisierten Fahrzeugführer zu warnen.

Nicht zuletzt wäre es jedoch auch denkbar, die Mittel zum Umgehen oder Außerkraftsetzen der Wegfahrsperre so zu gestalten, dass die Wegfahrsperre nach einem Anruf bei einer Meldestelle, zum Beispiel einem Polizeirevier, entweder von der Meldestelle selbst durch ein codiertes Funksignal oder vom Fahrzeugführer bzw. einem Dritten durch einen telefonisch von der Meldestelle übermittelten Code deaktiviert werden kann. Ein späterer Missbrauch kann in diesem Fall vermieden werden, indem der Code nach jedem Umgehen oder Außerkraftsetzen der Wegfahrsperre geändert wird.

Die Mittel zum Umgehen oder Außerkraftsetzen der Wegfahrsperre können grundsätzlich auf unterschiedliche Weise aktiviert werden, zum Beispiel mittels eines Notfallknopfs oder Notfallschalters, durch Aufrufen und Bestätigen einer entsprechenden Bedieneranweisung in einem Bedienungsmenü der Vorrichtung, vorteilhaft auf einem berührungsempfindlichen Bildschirm (Touchscreen) der Anzeigeeinrichtung, oder durch mehrmaliges Drehen des Zündschlüssels.

### Kurze Beschreibung der Zeichnungen

Im folgenden wird die Erfindung anhand zweier in der Zeichnung dargestellter Ausführungsbeispiele näher erläutert. Es zeigen
Fig. 1: eine schematische Ansicht einer Alkohol-Interlock-Vorrichtung eines Kraftfahrzeugs mit Mitteln zum Umgehen oder Außerkraftsetzen einer Wegfahrsperre;
Fig. 2: eine schematische Ansicht einer ähnlichen Alkohol-Interlock-Vorrichtung, jedoch mit anderen Mitteln zum Umgehen oder Außerkraftsetzen der Wegfahrsperre.

### Ausführungsformen der Erfindung

Die in der Zeichnung schematisch dargestellten, in eine Zünd- und Anlasseranlage 2 eines Kraftfahrzeugs integrierten Alkohol-Interlock-Vorrichtungen 4 dienen dazu, einen Start bzw. eine Inbetriebnahme des Kraftfahrzeugs durch einen alkoholisierten Fahrzeugführer zu verhindern, wenn der Alkoholgehalt im Atem des Fahrzeugführers einen vorgegebenen Schwellenwert übersteigt. Der Schwellenwert kann zum Beispiel etwa 0,25 mg Alkohol pro Liter Ausatemluft betragen, was einem Blutalkoholgehalt von 0,5 Promille entspricht, bei dem das Fahren von Kraftfahrzeugen nicht mehr zulässig ist.

Zur Messung des Alkoholgehalts im Atem des Fahrzeugführers umfassen die Alkohol-Interlock-Vorrichtungen 4 ein durch ein Kabel 6 oder alternativ auch drahtlos mit einem Steuergerät 8 verbundenen Handmessgerät 10, während die Alkohol-Interlock-Vorrichtungen 4 zum Verhindern des Starts bzw. der Inbetriebnahme des Kraftfahrzeugs eine vom Steuergerät 8 angesteuerte und ebenso wie das Steuergerät 8 in einen Zünd- und Anlasser-Stromkreis 12 des Kraftfahrzeugs integrierte Wegfahrsperre 14 aufweisen.

Weiter umfassen die Alkohol-Interlock-Vorrichtungen 4 ein auf dem Handmessgerät 10 angebrachtes Display 16. Auf diesem Display 16 erscheint eine Aufforderung an den Fahrzeugführer, zur Messung des Atemalkoholgehalts eine Atemprobe abzugeben, wenn ein Zündschlüssel in das Zündschloss 18 des Fahrzeugs gesteckt und durch Drehen des Zündschlüssels die Zündung des Kraftfahrzeugs sowie das in den Zünd- und Anlasser-Stromkreis 12 integrierte Steuergerät 8 eingeschaltet wird. Die Abgabe der Atemprobe wird vorgenommen, indem der Fahrzeugführer in ein ebenfalls auf dem Handmessgerät 10 angeordnetes Mundstück 20 bläst. Im Inneren des Handmessgeräts 10 sind geeignete Messeinrichtungen (nicht dargestellt) vorgesehen, mit denen die Alkoholkonzentration in der in das Mundstück 20 geblasenen Atemluft ermittelt werden kann, wie zum Beispiel die Messeinrichtungen, die in der eingangs genannten US 2003/0120139 A1 bzw. in den dort zitierten Druckschriften angegeben sind. Nach der Messung erscheint auf dem Display 16 eine Anzeige, ob der Alkoholgehalt in der vom Fahrzeugführer in das Mundstück 20 geblasenen Atemluft den oben genannten Schwellenwert übersteigt oder unterhalb dieses Schwellenwerts liegt.

Im zuerst genannten Fall wird vom Steuergerät 8 die Wegfahrsperre 14 aktiviert, um einen Start des Fahrzeugs zu verhindern. Die Wegfahrsperre 14 umfasst dazu ein vom Steuergerät 8 angesteuertes Unterbrecherrelais 22 in einem zu einem Anlasserrelais 24 führenden Strompfad 26 zwischen einem Pluspol 28 und einem Minuspol 30 einer Fahrzeugbatterie. Das Unterbrecherrelais 22 wird bei einer Aktivierung der Wegfahrsperre 14 vom Steuergerät 8 in geöffnetem Zustand festgehalten, wodurch eine Betätigung des Anlasserrelais 24 und damit das Schließen eines den Anlasser 32 enthaltender Anlasserstrompfads 34 beim Drehen des Zündschlüssels in eine Startposition verhindert wird.

Im zuletzt genannten Fall, d.h. bei einer Unterschreitung des Schwellenwerts, wird das Unterbrecherrelais 22 vom Steuergerät 8 geschlossen, woraufhin das Anlasserrelais 24 den Anlasserstrompfad 34 schließt und die Stromzufuhr zum Anlasser 32 freigibt, sobald der Zündschlüssel im Zündschloss 18 in die Startposition gedreht wird.

Eine zuvor aktivierte Wegfahrsperre 14 kann zwar dadurch deaktiviert werden, dass eine erneute Messung des Alkoholgehalts in der Atemluft des Fahrzeugführers vorgenommen wird, bei welcher der vorgegebene Schwellenwert unterschritten wird. Da jedoch eine solche Messung zum einen erst nach einer vorbestimmten, im Steuergerät 8 eingestellten Wartezeit von etwa 10 Minuten nach der Aktivierung der Wegfahrsperre 14 möglich ist und zum anderen auch die Messung selbst eine gewisse Zeit erfordert, ist es in Notfällen oder Gefahrensituationen nicht möglich, das Fahrzeug schnell von seinem Standort zu entfernen, zum Beispiel zum schnellen Aufsuchen eines Arztes oder Krankenhauses oder zur Abwehr der Gefahrensituation, zum Beispiel wenn das Fahrzeug eine Feuerwehrzufahrt blockiert.

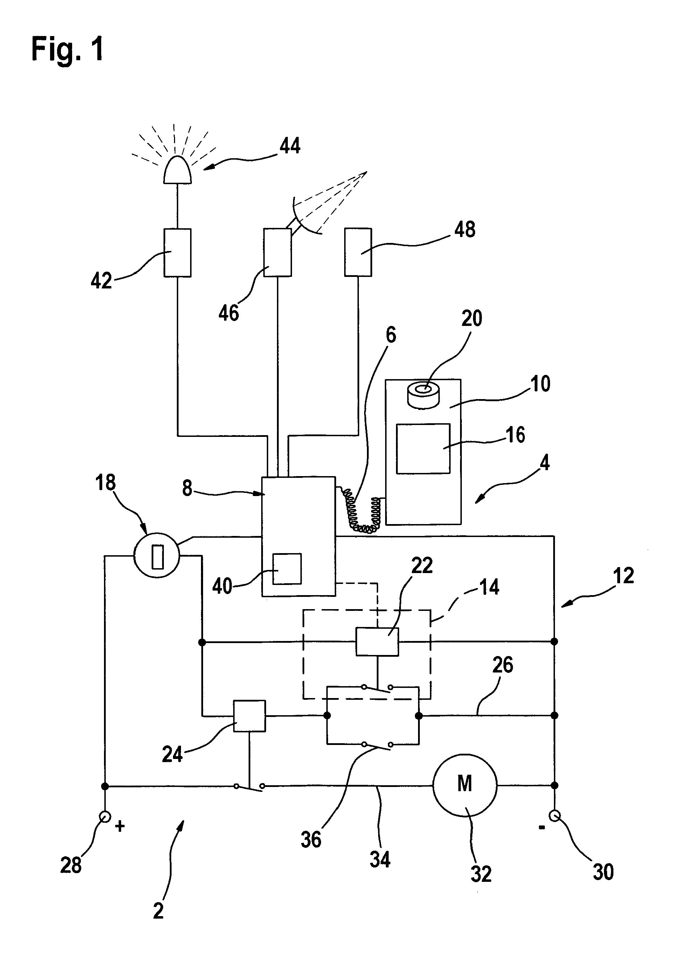

Um es in solchen Fällen zu gestatten, das Fahrzeug trotz der aktivierten Wegfahrsperre 14 zu starten, weist die in Fig. 1 dargestellte Alkohol-Interlock-Vorrichtung 4 einen parallel Unterbrecherrelais 22 im Strompfad 26 angeordneten manuell betätigbaren Notschalter 36 auf. Durch Betätigung dieses Notschalters 36 kann der zum Anlasserrelais 24 führende Strompfad 26 unter Umgehung des Unterbrecherrelais 22 und damit der Wegfahrsperre 14 geschlossen werden, woraufhin dem Anlasser 32 durch Drehen des Zündschlüssels in die Startposition Strom zugeführt wird.

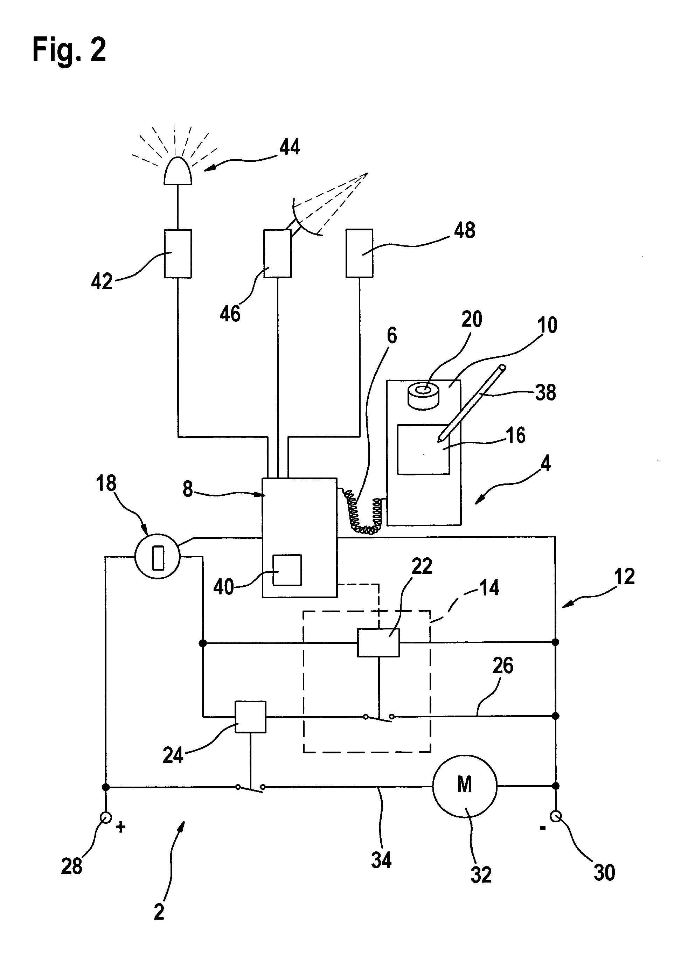

Die in Fig. 2 dargestellte Alkohol-Interlock-Vorrichtung 4 weist ein als Touchscreen ausgebildetes Display 16 auf, auf dem neben der Aufforderung zur Abgabe einer Atemprobe bzw. dem Über- oder Unterschreiten des Schwellenwerts durch den Alkoholgehalt der in das Mundstück 20 geblasenen Ausatemluft auch ein Bedienermenü angezeigt werden kann, in dem zum Beispiel mit einem Stift 38 Bedieneranweisungen eingegeben werden können. Bei dieser Vorrichtung ist an Stelle des Notschalters 36 eine entsprechende Bedieneranweisung im Bedienermenü vorgesehen, mit der das Steuergerät 8 angewiesen werden kann, die Wegfahrsperre 14 durch sofortiges Schließen des Unterbrecherrelais 22 zu deaktivieren.

Um eine missbräuchliche Benutzung des Notschalters 36 bzw. der Bedieneranweisung zum Deaktivieren der Wegfahrsperre 14 zu verhindern, enthält das Steuergerät 8 einen Speicher 40, in dem jede Betätigung des Notschalters 36 bzw. jede Bedieneranweisung zum Deaktivieren der Wegfahrsperre 14 gespeichert wird, so dass der Speicher 40 in gewissen Zeitabständen ausgelesen werden kann, um anhand der gespeicherten Anzahl von Umgehungen der Wegfahrsperre 14 festzustellen, ob gegebenenfalls eine missbräuchliche Benutzung stattgefunden hat.

Weiter kann das Steuergerät 8 mit einem Blinkerrelais 42 einer Warnblinkanlage 44 des Fahrzeugs verbunden sein, um die Warnblinkanlage 44 nach jeder Umgehung der Wegfahrsperre 14 solange einzuschalten, bis der Motor des Fahrzeugs durch Drehen des Zündschlüssels im Zündschloss 18 erneut abgestellt wird. Alternativ oder zusätzlich kann ein mit dem Steuergerät 8 verbundener oder ggf. auch in das Steuergerät 8 integrierter Sender 46 vorgesehen sein, der über ein Mobilfunk-, ein Car-to-Car- oder ein anderes Kommunikationsnetz eine Meldung an ein in der Nähe des Fahrzeugs befindliches Polizeirevier, Polizeifahrzeug oder an eine andere Meldestelle absetzt, die daraufhin eine Überprüfung des Fahrzeugführers bzw. des Fahrzeugs vornehmen oder veranlassen kann, um das Fahrzeug im Falle einer missbräuchlichen Deaktivierung der Wegfahrsperre 14 stillzulegen.

Darüber hinaus kann das Steuergerät 8 auch mit einer Steuerung 48 des Kraftfahrzeugs verbunden werden, um dessen maximale Fahrtgeschwindigkeit bis zum Abstellen des Motors auf einen Wert von weniger als 50 km/h zu begrenzen.

## Patentansprüche

1. Vorrichtung zur Verhinderung eines Starts oder der Inbetriebnahme eines Kraftfahrzeugs durch einen unter Alkoholeinfluss stehenden Fahrzeugführer, mit einer Einrichtung (10) zur Ermittlung des Alkoholgehalts im Atem, Blut, Gewebe, Hautschweiß oder in Gewebeflüssigkeit des Fahrzeugführers, sowie einer Wegfahrsperre (14), die den Start oder die Inbetriebnahme des Fahrzeugs verhindert, wenn der von der Einrichtung ermittelte Alkoholgehalt einen vorgegebenen Schwellenwert übersteigt, mit Mitteln (36) zum Außerkraftsetzen der Wegfahrsperre (14), die Vorrichtung weiterhin umfassend Mittel (8, 48) zur Begrenzung der maximalen Fahrgeschwindigkeit des Fahrzeugs nach jedem Außerkraftsetzen der Wegfahrsperre (14) bis zu einer erneuten Freigabe der Wegfahrsperre (14) wobei die maximale Fahrgeschwindigkeit des Fahrzeugs bis zum Abstellen des Motors auf einen Geschwindigkeitswert von weniger als 50 km/h begrenzt wird, und/oder Mittel (8, 42) zur automatischen Aktivierung der Warnblinkanlage (44) des Fahrzeuges nach jedem Außerkraftsetzen der Wegfahrsperre (14), wobei die Mittel (8, 42) zur automatischen Aktivierung der Warnblinkanlage (44) ausgebildet sind, die Warnblinkanlage (44) des Fahrzeugs so lange einzuschalten, bis der Motor des Fahrzeugs erneut abgestellt wird.

2. Vorrichtung nach Anspruch 1, **gekennzeichnet durch** Mittel (8, 46) zum Absenden eines Signals an eine Meldestelle bei jedem Außerkraftsetzen der Wegfahrsperre (14).

3. Vorrichtung nach Anspruch 1, **dadurch gekennzeichnet, dass** die Mittel zum Außerkraftsetzen der Wegfahrsperre (14) einen Notschalter (36) oder Betätigungsknopf zur Deaktivierung der Wegfahrsperre (14) umfassen.

4. Vorrichtung nach Anspruch 1, **dadurch gekennzeichnet, dass** die Mittel zum Außerkraftsetzen der Wegfahrsperre (14) eine die Deaktivierung der Wegfahrsperre (14) durch ein Steuergerät (8) auslosende Bedieneranweisung in einem Bedienermenü der Vorrichtung (4) umfassen.

5. Vorrichtung nach Anspruch 1, **dadurch gekennzeichnet, dass** die Mittel zum Außerkraftsetzen der Wegfahrsperre (14) ein mehrmaliges Betätigen eines Zündschlüssels des Fahrzeugs umfassen.

6. Vorrichtung nach einem der vorangehenden Ansprüche, **gekennzeichnet durch** einen Speicher (40) zur Speicherung jedes Außerkraftsetzens der Wegfahrsperre (14).

7. Vorrichtung nach Anspruch 2, **dadurch gekennzeichnet, dass** die Mittel (46) zum Absenden eines Signals an eine Meldestelle ein Mobilfunkgerät umfassen.

8. Vorrichtung nach 2, gekennzeichnet, dass die Mittel (46) zum Absenden eines Signals an eine Meldestelle ein Car-To-Car-Kommunikationsgerät umfassen.

9. Vorrichtung nach Anspruch 2, **dadurch**
**gekennzeichnet, dass** die Mittel (8, 46) zum Absenden eines Signals ausgebildet sind, ein Signal an eine Polizeistation oder ein Polizeifahrzeug in der Nähe des Fahrzeugs abzusenden.

## Claims

1. Apparatus for preventing starting or the activation of a motor vehicle by a vehicle driver under the influence of alcohol, having a device (10) for determining the alcohol content in the breath, blood, tissue, sweat or tissue fluid of the vehicle driver, and an immobilizer (14) which prevents the starting or activation of the vehicle if the alcohol content determined by the device exceeds a predefined threshold value, having means (36) for deactivating the immobilizer (14), said apparatus also comprising means (8, 48) for limiting the maximum speed of the vehicle after each deactivation of the immobilizer (14) until the immobilizer (14) is enabled again, the maximum speed of the vehicle being limited to a speed value of less than 50 km/h until the engine is switched off, and/or means (8, 42) for automatically activating the hazard warning system (44) of the vehicle after each deactivation of the immobilizer (14), the means (8, 42) for automatically activating the hazard warning system (44) being designed to switch on the hazard warning system (44) of the vehicle until the engine of the vehicle is switched off again.

2. Apparatus according to Claim 1, **characterized by** means (8, 46) for sending a signal to a notification station each time the immobilizer (14) is deactivated.

3. Apparatus according to Claim 1, **characterized in that** the means for deactivating the immobilizer (14) comprise an emergency switch (36) or actuation button for deactivating the immobilizer (14).

4. Apparatus according to Claim 1, **characterized in that** the means for deactivating the immobilizer (14) comprise an operator instruction in an operator menu of the apparatus (4), which operator instruction triggers the deactivation of the immobilizer (14) by means of a control unit (8).

5. Apparatus according to Claim 1, **characterized in that** the means for deactivating the immobilizer (14) comprise repeated actuation of an ignition key of the vehicle.

6. Apparatus according to one of the preceding claims, **characterized by** a memory (40) for storing each deactivation of the immobilizer (14).

7. Apparatus according to Claim 2, **characterized in that** the means (46) for sending a signal to a notification station comprise a mobile radio unit.

8. Apparatus according to Claim 2, **characterized in that** the means (46) for sending a signal to a notification station comprise a car-to-car communication unit.

9. Apparatus according to Claim 2, **characterized in that** the means (8, 46) for sending a signal are designed to send a signal to a police station or a police vehicle in the vicinity of the vehicle.

## Revendications

1. Ensemble destiné à empêcher le démarrage ou la mise en marche d'un véhicule automobile par un conducteur sous l'influence de l'alcool, l'ensemble présentant
un dispositif (10) de détermination de la teneur en alcool de l'haleine du sang, des tissus de la sueur ou des liquides tissulaires du conducteur du véhicule,
un système (14) de blocage du démarrage qui empêche le démarrage ou la mise en marche du véhicule si la teneur en alcool déterminée à l'aide du dispositif dépasse une valeur de seuil prédéterminée et
des moyens (36) de mise hors service du système (14) de blocage du démarrage,
l'ensemble comprenant en outre
des moyens (8, 48) qui limitent la vitesse maximale du véhicule après chaque mise hors service du système (14) de blocage du démarrage jusqu'à nouvelle libération du système (14) de blocage du démarrage, la vitesse maximale de roulage du véhicule jusqu'à l'extinction du moteur étant limitée à une valeur inférieure à 50 km/h, et/ou
des moyens (8, 42) d'activation automatique du système (44) de clignotants d'avertissement du véhicule après chaque mise hors service du système (14) de blocage du démarrage,
les moyens (8, 42) d'activation automatique du système (44) de clignotants d'avertissement du véhicule étant configurés pour maintenir en fonctionnement le système (44) de clignotants d'avertissement du véhicule jusqu'à ce que le moteur du véhicule ait été de nouveau éteint.

2. Ensemble selon la revendication 1, **caractérisé par** des moyens (8, 46) qui envoient un signal à un site de déclaration lors de chaque mise hors service du système (14) de blocage du démarrage.

3. Ensemble selon la revendication 1, **caractérisé en ce que** les moyens de mise hors service du système (14) de blocage du démarrage comprennent un commutateur de secours (36) ou un bouton d'actionnement de la mise hors service du système (14) de blocage du démarrage.

4. Ensemble selon la revendication 1, **caractérisé en ce que** les moyens de mise hors service du système (14) de blocage du démarrage comprennent une indication de service d'un menu d'utilisation de l'ensemble (4) qui déclenche la désactivation du système (14) de blocage du démarrage par un appareil de commande (8).

5. Ensemble selon la revendication 1, **caractérisé en ce que** les moyens de mise hors service du système (14) de blocage du démarrage comprennent l'actionnement répété de la clé de démarrage du véhicule.

6. Ensemble selon l'une des revendications précédentes, **caractérisé par** une mémoire (40) qui conserve la trace de chaque mise hors service du système (14) de blocage du démarrage.

7. Ensemble selon la revendication 2, **caractérisé en ce que** les moyens (46) qui envoient un signal à un site de déclaration comprennent un appareil de radiotéléphonie.

8. Ensemble selon la revendication 2, **caractérisé en ce que** les moyens (46) qui envoient un signal à un site de déclaration comprennent un appareil de communication entre voitures automobiles.

9. Ensemble selon la revendication 2, **caractérisé en ce que** les moyens (8, 46) d'envoi d'un signal envoient un signal à un poste de police ou à un véhicule de police présent à proximité du véhicule.
